# EUROPÄISCHE PATENTANMELDUNG

(11) **EP 0 849 511 A2**
(43) Veröffentlichungstag der Anmeldung: **24.06.1998**
(21) Anmeldenummer: 97115230.1
(22) Anmeldetag: 03.09.1997
(51) Int. Cl.: F16J 9/26

(54) **Kompressionskolbenring**

(30) Priorität: 21.11.1996 DE 19648160
(71) Anmelder: AE GOETZE GmbH, D-51399 Burscheid (DE)
(72) Erfinder: Michel, Hans-Albert, Dipl.-Ing., 51379 Leverkusen 3 (DE)

(57) **Zusammenfassung**

Die Erfindung betrifft einen Kompressionskolbenring (3) mit einem Ringkörper aus nitrierbarem Werkstoff mit einer nitrierten Laufkante (6). Die Laufkante (6) ist durch ein an sich bekanntes Pulsplasmanitrierverfahren gehärtet.

## Beschreibung

Die Erfindung betrifft einen Kompressionskolbenring für Brennkraftmaschinen mit einem Ringkörper aus nitrierbarem Werkstoff, mit einer verschleißfesten radialen Umfangsfläche sowie ein Verfahren zur Herstellung des Kolbenringes.

Es ist bekannt, Laufflächen von Kolbenringen mit Verschleißschutzschichten zu versehen, die je nach Anwendungsfall aus galvanisch aufgetragenen Metallen oder aus in einem thermischen Spritzverfahren aufgetragenen Metallen und/oder Metallegierungen bestehen. Zur Erhöhung der Brandspursicherheit ist es darüber hinaus bekannt, die Lauffläche und gegebenenfalls die Flankenflächen zu nitrieren. Aus der DE 3 506 747 C2 ist ein Verfahren zur Herstellung eines Kolbenringes zu entnehmen, bei dem alle Oberflächen, mit Ausnahme der radialen Umfangsfläche, nitriert sind. Auf der radialen Umfangsfläche ist eine aufgespritzte Schicht vorgesehen.

Der Erfindung liegt die Aufgabe zugrunde, einen in der Herstellung besonders einfachen Kolbenring herzustellen, der im Hinblick auf Funktion und die Herstellkosten optimiert ist. Diese Aufgabe wird durch die kennzeichnenden Merkmale des Anspruch 1 gelöst. Vorteilhafte Ausgestaltungen der Erfindung sind in den Unteransprüchen beschrieben.

Der erfindungsgemäße Kompressionskolbenring ist nur auf einem axial niedrigen Bereich der Lauffläche und zwar auf der Laufkante nitriert, die übrigen Umfangsflächen sind unbehandelt. Als besonders geeignet zur Herstellung solcher Kolbenringe hat sich das an sich bekannte Pulsplasmanitrierverfahren herausgestellt. Der durch stromstarke Glimmentladung unterstützte Nitriervorgang läßt niedrige Nitriertemperaturen, zum Beispiel 350°C, zu und erfordert kürzere Nitrierzeiten als das Gasnitrieren. Durch gezielte Einstellung einiger Nitrierparameter wie Prozeßspannung, Temperatur oder Gasdruck, ist es möglich, nur die radial vorstehende Laufkante der radialen Umfangsfläche zu nitrieren. Nur die Laufkante ist für die Funktion besonders wichtig.

Die Erfindung ist anhand einer Prinzipdarstellung in der Zeichnung dargestellt und wird im folgenden näher erläutert. Es zeigen:
- Figur 1: Vakuumbehälter zum Plasmanitrieren
- Figur 2: Kolbenringe nach dem Nitriervorgang

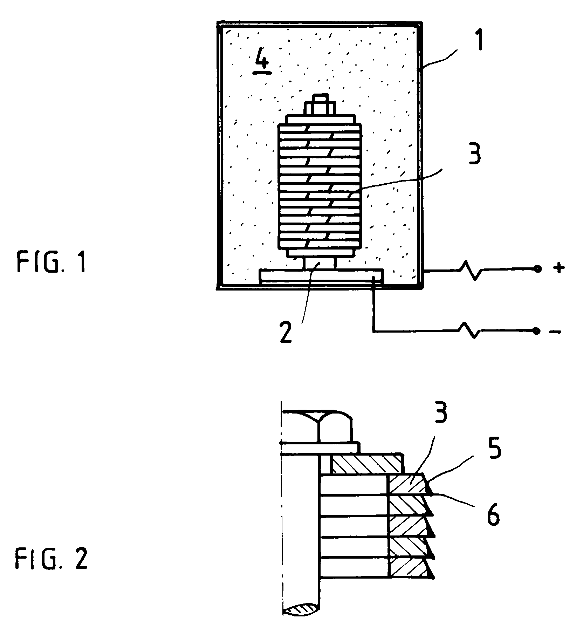

Die Figur 1 zeigt einen Vakuumbehälter (1), in dem eine Vielzahl auf einen Dorn (2) gestapelte Kompressionskolbenringe (3) angeordnet sind. Die Kompressionskolbenringe (3) sind elektrisch vom Vakuumbehälter (1) isoliert. Nachdem der Vakuumbehälter evakuiert ist, wird zwischen dem Vakuumbehälter (1) und den Kompressionskolbenringen (3) eine Spannung von einigen hundert Volt angelegt. Das im Vakuumbehälter (1) vorhande Prozeßgas (4) ionisiert und wird dadurch elektrisch leitend. Stickstoff-Ionen prallen auf die radiale Umfangsfläche (5) (Figur 2) der Kompressionskolbenringe (3). Die Nitrierparameter Druck, Temperatur, Zeit und Gasart sind so gesteuert, daß sich nur die radial vorstehenden Laufkanten (6) erhitzen und freier Stickstoff in die Laufkanten (6) eindringen kann.

## Patentansprüche

1. Kompressionskolbenring für Brennkraftmaschinen mit einem Ringkörper aus nitrierbarem Werkstoff, mit einer verschleißfesten radialen Umfangsfläche, wobei die radiale Umfangsfläche geneigt zur Kolbenringachse verläuft, so daß eine Laufkante gebildet ist, dadurch gekennzeichnet, daß nur die Lautkante (6) der radialen Umfangsfläche (5) nitriert ist.

2. Kompressionskolbenring nach Anspruch 1, dadurch gekennzeichnet, daß der Kompressionskolbenring (3) aus Gußeisen besteht.

3. Verfahren zur Herstellung von Krompressionskolbenringen nach Anspruch 1, dadurch gekennzeichnet, daß die Kompressionskolbenringe (3) einem Vakuumbehälter (1) zugeführt werden, wobei alle Flächen, mit Ausnahme der radialen Umfangsfläche (5), abgedeckt sind, daß anschließend die Kompressionskolbenringe (3) nach einem an sich bekannten Pulsplasmanitrierverfahren nitriert werden, wobei die Nitrierparameter so gewählt werden, daß nur die Laufkante (6) der radialen Umfangsfläche (5) nitriert wird.
